# Europäisches Patentamt
# European Patent Office
# Office européen des brevets

(11) Veröffentlichungsnummer : **0 318 827 B1**

(12) # EUROPÄISCHE PATENTSCHRIFT

(45) Veröffentlichungstag der Patentschrift :
29.01.92 Patentblatt 92/05

(51) Int. Cl.$^5$ : **C25D 13/24**

(21) Anmeldenummer : **88119549.9**

(22) Anmeldetag : **24.11.88**

(54) **Verfahren zum Entfernen von Säure aus kathodischen Elektrotauchlackier-Bädern mittels Elektrodialyse.**

(30) Priorität : **02.12.87 DE 3740785**

(43) Veröffentlichungstag der Anmeldung :
**07.06.89 Patentblatt 89/23**

(45) Bekanntmachung des Hinweises auf die Patenterteilung :
**29.01.92 Patentblatt 92/05**

(84) Benannte Vertragsstaaten :
**AT BE CH DE ES FR GB IT LI NL SE**

(56) Entgegenhaltungen :
**GB-A- 2 111 080**

(56) Entgegenhaltungen :
**US-A- 3 784 460**
**PATENT ABSTRACTS OF JAPAN, Band 4, Nr. 85 (C-15)[567], 18. Juni 1980; & JP-A-55 50 493 (YOSHIDA KOGYO K.K.) 12-04-1980**

(73) Patentinhaber : **BASF Aktiengesellschaft Carl-Bosch-Strasse 38 W-6700 Ludwigshafen (DE)**

(72) Erfinder : **Voss, Hartwig, Dr. Mozartstrasse 57 W-6710 Frankenthal (DE)**
Erfinder : **Bruecken, Thomas, Dr. Oespeler Dorfstrasse 57 W-4600 Dortmund 76 (DE)**

EP 0 318 827 B1

## Beschreibung

Die vorliegene Erfindung betrifft ein neues Verfahren zum Entfernen von Säure aus kathodischen Elektrotauchlackier-Bädern, in denen elektrisch leitende Substrate mit in Form von wäßrigen Dispersionen vorliegenden kationischen Harzen beschichtet werden, wobei mindestens ein Teil des Tauchlackierbades einer Ultrafiltration unterzogen wird, bei der die Ultrafiltrationsmembran das kationische Harz zurückhält und ein Ultrafiltrat gebildet wird, das Wasser, Lösungsmittel, niedermolekulare Stoffe und Ionen enthält und zumindest ein Teil des Ultrafiltrates in das Tauchbad zurückgeführt wird.

Die kathodische Elektrotauchlackierung ist bekannt und wird z.B. beschrieben in F. Loop, "Cathodic electrodeposition for automotive coatings" World Surface Coatings Abstracts (1978), Abs. 3929.

Bei diesem Verfahren werden elektrisch leitende Substrate mit in Form von wäßrigen Dispersionen vorliegenden kationischen Harzen beschichtet. Kathodisch abscheidbare Harze enthalten üblicherweise Aminogruppen. Um sie in eine stabile wäßrige Dispersion zu überführen, werden sie mit üblichen Säuren (in einigen Veröffentlichungen auch als Solubilisierungsmittel bezeichnet) wie Ameisensäure, Essigsäure, Milchsäure oder Phosphorsäure protoniert. Während einer Elektrotauchlackbeschichtung wird die Protonierung in unmittelbarer Nähe des zu beschichtenden metallischen Gegenstandes durch Neutralisation mit den durch elektrolytische Wasserzersetzung entstehenden Hydroxylionen wieder rückgängig gemacht, so daß das Bindemittel auf dem Substrat ausfällt ("koaguliert"). Die Säure wird nicht mit ausgefällt, so daß es mit zunehmender Lackierdauer zu einer Anreicherung der Säure im Bad kommt. Dadurch fällt der pH-Wert, was zu einer Destabilisierung des Elektrotauchlackes führt. Deshalb muß die überschüssige Säure neutralisiert oder aus dem Bad entfernt werden.

In der US-A 3663405 wird die Ultrafiltration von Elektrotauchlacken beschrieben. Bei der Ultrafiltration wird der Elektrotauchlack unter einem gewissen Druck entlang einer Membran geführt, die die höhermolekularen Bestandteile des Lacks zurückhält, aber die niedermolekularen Bestandteile wie organische Verunreinigungen, Zersetzungsprodukte, anorganische Salze, Harzsolubilisierungsmittel (Säuren) und Lösungsmittel passieren läßt. Zur Entfernung dieser niedermolekularen Bestandteile wird ein Teil des Ultrafiltrates verworfen und somit aus dem System entfernt. Ein anderer Teil des Ultrafiltrates wird in die Spülzone der Lackierstraße geführt und wird dort zum Abspülen der noch an den lackierten Gegenständen anhaftenden Lackdispersionen ("drag-out") verwendet. Ultrafiltrat und abgespülte Lackdispersionen werden zwecks Rückgewinnung des Austrags wieder dem Elektrotauchlackbecken zugeführt. Da überschüssiges Solubilisierungsmittel in großen Mengen anfällt, ist es nicht möglich, es durch Verwerfen von Ultrafiltrat in ausreichender Menge aus dem Bad zu entfernen.

In der US-A 3663406 ist die parallele Anwendung von Ultrafiltration und Elektrodialyse zur Aufarbeitung und zur Steuerung des Solubilisierungsmittel-Haushalts von Elektrotauchlacken beschrieben. Die Elektrodialyse wird im Elektrotauchlackbecken so installiert, daß die Gegenelektrode zum beschichteten Gegenstand durch eine Ionenaustauschermembran und einen Elektrolyt, der das Solubilisierungsmittel enthält, von der Lackdispersion getrennt ist. Durch Anlegen eines elektrischen Feldes wandern die zu den ionischen Harzgruppen entgegengesetzt geladenen Ionen durch die Ionenaustauschermembran in den Elektrolyten und können von dort über einen separaten Kreislauf ausgeschleust werden. Diese im Elektrotauchlackbecken installierten Elektrodialyseeinheiten benötigen viel Platz und sind sehr wartungsintensiv. Die Membranen können sich mit Lackpartikeln zusetzen oder können durch die zu lackierenden Gegenstände mechanisch beschädigt werden, so daß ein Austausch der Membranen erforderlich wird. Dies ist zeit- und kostenintensiv und kann den Lackierprozeß für eine gewisse Zeit außer Betrieb setzen. Die Ultrafiltration wird nur benötigt, um Spülwasser für die Lackierstraße zu erzeugen.

Aus diesem Grund gibt es Verfahren, die es ermöglichen, die Elektrodialyse aus dem Elektrotauchlackbecken in die Anlagenperipherie zu verlegen. In der DE-A-3243770 und der EP-A-0156341 werden derartige Verfahren beschrieben, bei denen der Teil des Ultrafiltrates, der in die Spülzone und dann in das Elektrotauchbecken zurückgeführt wird, vor dem Eintritt in die Spülzone einer Behandlung im Kathodenraum einer mit einer Anionenaustauschermembran geteilten Elektrolysezelle unterzogen wird. Dadurch lassen sich die im Ultrafiltrat angereicherten Solubilisierungsmittel (Säuren) aus dem Lackierprozeß entfernen. Der große Nachteil dieser Elektrolyseverfahren besteht darin, daß an der Kathode aus dem Ultrafiltrat neben anderen Kationen auch Blei abgeschieden wird, das aus einem Korrosionsschutzpigment stammt, das üblicherweise bei der kathodischen Elektrotauchlackierung verwendet wird. Deshalb wurde die Kathode beweglich und damit regenerierbar ausgelegt, was sehr aufwendig ist.

Die in der deutschen Patentanmeldung P 3642164.2 beschriebenen Elektrodialyseverfahren stellen eine wesentliche Verbesserung dar. Und zwar gelingt es ohne die vorher dargelegten Nachteile im wesentlichen nur die Säure, welche die Harzsuspension solubilisiert, aus dem Ultrafiltrat abzutrennen. Erreicht wird dieses dadurch, daß man

A) das Ultrafiltrat durch die Kammern $K_1$ einer Elektrodialysezelle $Z_A$ mit der charakteristischen Sequenz

$$—(K_2\text{-}M_1\text{-}K_1\text{-}M_1)_n—,$$

in der $M_1$ die Anionenaustauschermembranen und n einen Wert von 1 bis etwa 500 bedeuten, leitet, und daß man durch die Kammern $K_2$ eine wäßrige Base leitet, oder daß man

B) das Ultrafiltrat durch die Kammern $K_1$ einer Elektrodialysezelle $Z_B$ mit der charakteristischen Sequenz

$$—(K_2\text{-}M_1\text{-}K_1\text{-}M_2)_n—,$$

in der $M_1$ die Anionenaustauschermembranen und $M_2$ bipolare Membranen bedeuten, leitet, und daß man durch die Kammern $K_2$ Wasser oder einen Elektrolyten, bevorzugt die abzutrennende Säure, ein Salz dieser Säure oder ein Gemisch aus beiden, leitet, oder daß man

C) das Ultrafiltrat durch die Kammern $K_1$ einer Elektrodialysezelle $Z_C$ mit der charakteristischen Sequenz

$$—(K_3\text{-}M_1\text{-}K_1\text{-}M_1\text{-}K_2\text{-}M_2)_n—,$$

in der $M_1$ die Anionenaustauschmembranen und $M_2$ die Kationenaustauschermembranen bedeuten, leitet, und daß man durch die Kammern $K_2$ eine wäßrige Base sowie durch die Kammern $K_3$ Wasser oder einen Elektrolyten, bevorzugt die abzutrennende Säure, ein Salz dieser Säure oder ein Gemisch aus beiden, leitet und die Elektrodialyse bis zum gewünschten Entsäuerungsgrad durchführt.

Es zeigt sich jedoch, daß es je nach Verfahrensbedingungen (z.B. ein hoher Austrags-pH-Wert des Ultrafiltrats bei Feed & Bleed-Prozeßführung, der Elektrotauchlackierbadzusammensetzung oder Güte der Ultrafiltration) nach einiger Betriebszeit zu einer Ablagerung von organischem Material (niedermolekulare Bruchstücke des Harz- bzw. Bindermaterials) auf den Membranen kommen kann, die den Entsäuerungsprozeß verlangsamt.

Der Erfindung lag daher die Aufgabe zugrunde, überschüssige Säure aus dem Ultrafiltrat von kathodischen Elektrotauchlackierbädern unter Vermeidung der zuvor beschriebenen Nachteile, zu entfernen.

Es wurde ein Verfahren zum Entfernen von Säure aus kathodischen Elektrotauchlackier-Bädern gefunden, in denen elektrisch leitende Substrate mit kationischen, in Form von wäßrigen Dispersionen vorliegenden Harzen beschichtet werden, durch Trennung der Dispersion mittels Ultrafiltration in die Harzdispersion und das Ultrafiltrat und Entsäuerung des Ultrafiltrates, indem man das Ultrafiltrat durch die Kammern $K_1$ einer mit Gleichstrom betriebenen Elektrodialysezelle mit der charakteristischen Sequenz

$$—(K_2\text{-}M_1\text{-}K_1\text{-}M_1)_n—,$$

in der $M_1$ die Anionenaustauschermembranen und n einen Wert von 1 bis etwa 500 bedeuten, und eine wäßrige Base durch die Kammern $K_2$ leitet, das dadurch gekennzeichnet ist, daß man das elektrische Feld, das den Ionentransport durch die Membranen bewirkt, umpolt.

Für die kathodische Elektrotauchlackierung können eine große Anzahl von Lacken verwendet werden. Die Lacke erhalten ihren ionischen Charakter durch kationische Harze, die üblicherweise Aminogruppen enthalten, die mit üblichen Säuren, z.B. Ameisensäure, Essigsäure, Milchsäure oder Phosphorsäure neutralisiert werden, wobei kationische Salzgruppen gebildet werden. Derartige kationisch abscheidbare Zusammensetzungen sind beispielsweise in US-A-4031050, US-A-4190567, DE-A-2752555 und EP-A-12463 beschrieben.

Diese kationischen Harzdispersionen werden üblicherweise mit Pigmenten, löslichen Farbstoffen, Lösungsmitteln, Verlaufsverbesserern, Stabilisatoren, Antischaummitteln, Vernetzern, Härtungskatalysatoren, Blei- und anderen Metallsalzen sowie sonstigen Hilfs- und Zusatzstoffen zu den Elektrotauchlacken kombiniert.

Zur kathodischen Elektrotauchlackierung wird im allgemeinen durch Verdünnen mit entionisiertem Wasser ein Feststoffgehalt des Elektrotauchbades von 5 bis 30, vorzugsweise 10 bis 20 Gew.% eingestellt. Die Abscheidung erfolgt im allgemeinen bei Temperaturen von 15 bis 40°C während einer Zeit von 1 bis 3 Minuten und bei pH-Werten von 5,0 bis 8,5, vorzugsweise pH 6,0 bis 7,5, bei Abscheidespannungen zwischen 50 und 500 Volt. Nach dem Abspülen des auf dem elektrisch leitenden Körper abgeschiedenen Films wird dieser bei etwa 140°C bis 200°C in 10 bis 30 Minuten, vorzugsweise bei 150 bis 180°C in ca. 20 Minuten gehärtet.

Elektrotauchlackierbäder werden in aller Regel kontinuierlich betrieben, d.h. die zu beschichtenden Gegenstände werden ständig in das Bad eingeführt, beschichtet und dann wieder entfernt. Deshalb ist es auch erforderlich, das Bad ständig mit Lack zu beschicken.

Nach kurzer Betriebszeit reichern sich unerwünschte Verunreinigungen und Solubilisierungsmittel im Bad an. Beispiele für derartige Verunreinigungen sind Öle, Phosphate und Chromate, die in das Bad von den zu beschichtenden Substraten eingebracht werden, Carbonate, überschüssige Solubilisierungsmittel, Lösungsmittel, Oligomere die sich im Bad anreichern, weil sie nicht mit dem Harz abgeschieden werden. Derartige unerwünschte Bestandteile beeinflussen das Beschichtungsverfahren negativ, so daß die chemischen und physikalischen Eigenschaften des abgelagerten Filmes unbefriedigend werden.

Um diese Verunreinigungen zu entfernen und die Zusammensetzung des Elektrotauchlackierbades relativ gleichmäßig zu halten, wird ein Teil des Bades abgezogen und einer Ultrafiltration zugeführt.

Die zu ultrafiltrierenden Lösungen, werden unter Druck, beispielsweise entweder durch komprimiertes Gas oder eine Flüssigkeitspumpe in einer Zelle in Berührung mit einer Filtrationsmembrane gebracht, die auf einem porösen Träger angeordnet ist. Jede Membrane oder jedes Filter, das mit dem System chemisch verträglich ist und die gewünschten Trenneigenschaften aufweist, kann verwendet werden. Es entsteht kontinuierlich ein Ultrafiltrat, das gesammelt wird, bis die in der Zelle zurückgehaltene Lösung die gewünschte Konzentration erreicht hat oder der gewünschte Anteil an Lösungsmittel und darin gelösten niedermolekularen Stoffen entfernt ist. Geeignete Vorrichtungen zur Ultrafiltration sind z.B. in der US-A-3495465 beschrieben.

Obwohl die Ultrafiltration zum Entfernen von zahlreichen Verunreinigungen aus dem Tauchbad einsetzbar ist, ist damit eine zufriedenstellende Entfernung von Solubilisierungsmitteln aus dem Bad nicht möglich. Einer der Gründe dafür ist, daß bei der industriellen Verwendung das Ultrafiltrat zum Waschen und Spülen von frisch beschichteten Gegenständen verwendet wird, um lose haftende Lackteilchen abzuspülen. Diese Waschlösung wird in das Tauchbad zurückgeführt. Obwohl ein Teil des Ultrafiltrates üblicherweise verworfen wird, reicht dies in der Regel nicht aus, um den Überschuß an Säure zu entfernen. Deshalb ist es erforderlich, mindestens einen Teil des Ultrafiltrates einer Elektrodialyse zuzuführen.

Gut geeignet sind als Elektrodialysezellen z.B. mit flachen Austauschermembranen und Dichtrahmen ausgerüstete Apparate, die bis zu 800 parallel zueinander angeordnete Kammern enthalten.

Das elektrische Feld wird über Elektroden am jeweiligen Ende des Membranstapels angelegt, wobei die Elektrodenspülung über einen separaten Elektrolyt-Kreislauf oder im Kreislauf der Kammern $K_2$ integriert ist. Die Anordnung von Anode und Kathode ist dabei frei wählbar. Im Falle eines separaten Elektrodenspülkreises erfolgt die hydraulische Trennung zu den benachbarten Prozeßkammern vorzugsweise durch Kationenaustauschermenbranen.

Es wird mit Gleichstrom und Stromdichten j bis 100 (mA/cm$^2$), bevorzugt 1 bis 30 (mA/cm$^2$) gearbeitet. Die dafür notwendige Gleichspannung ist von den Leitfähigkeiten der Lösungen und Membranen sowie von den Membranabständen abhängig.

Die Umpolung des elektrischen Feldes erfolgt mit Frequenzen bis zu 30 min$^{-1}$, bevorzugt 0,001 bis 10, besonders bevorzugt 0,05 bis 0,5 min$^{-1}$. Neben dem Effekt des Belagabbaus auf den Membranen ist ein Umpolen im Falle, daß die Elektroden in den Basekreis integriert sind, von Vorteil. Und zwar lösen sich kathodisch abgeschiedene Bleispuren nach dem Umpolen anodisch wieder ab. Für diese Elektrodenreinigung sind wegen des sehr geringen Pb$^{++}$-Gehalts der Baselösung niedrigere Frequenzen z.B. 0,005 bis 0,05 min$^{-1}$ ausreichend.

Geeignete Elektrodenmaterialien sind beispielsweise Nickel, platiniertes Titan oder Ventilmetalloxide auf Titanbasis mit einer keramischen Zwischenschicht, wie sie in der DE-A 3339566 beschrieben sind.

In der Elektrodialysezelle wird durch die Kammern $K_1$ das Ultrafiltrat und durch die Kammern $K_2$ die wäßrige Base geleitet.

Als wäßrige Basen werden anorganische oder organische Basen verwendet. Geeignete anorganische Basen sind Hydroxide oder Carbonate der Alkali- oder Erdalkalimetalle oder des Ammoniums. Bevorzugt sind Natriumhydroxid, Kaliumhydroxid, Natriumcarbonat, Kaliumcarbonat, Calciumhydroxid, Bariumhydroxid, Ammoniak oder Ammoniumcarbonat. Als organische Basen werden Amine wie die Trialkylamine, Trimethylamin und Triethylamin oder Hilfsbasen, wie Diazabicyclooctan und Dicyclohexylethylamin oder Polyamine wie Polyethylenimine und Polyvinylamine oder quaternäre Ammoniumverbindungen verwendet.

Die wäßrigen Basen haben einen pH-Wert bis 14. Bevorzugt ist ein pH-Wert zwischen 11 und 13, der über die Konzentration der Base eingestellt werden kann.

In den wäßrigen Basen kann mindestens ein Salz, vorzugsweise bestehend aus einem Kation der obengenannten Basen und einem Anion der oben genannten üblichen Säuren (Solubilisierungsmittel), in einer Konzentration von 0,001 bis 10 Äquivalenten pro Liter, vorzugsweise 0,001 bis 1 Äquivalent pro Liter mitverwendet werden. Bevorzugt sind Natrium- und Kaliumacetat sowie Natrium- und Kaliumlactat.

Man kann das Verfahren kontinuierlich oder diskontinuierlich durchführen. Beim kontinuierlichen Verfahren erfolgt ein einmaliger und beim diskontinuierlichen Betrieb ein mehrfacher Durchlauf der Lösungen durch die Elektrodialysezelle. Das letztgenannte Verfahren (Batch) läßt sich in ein quasi-kontinuierliches Verfahren umwandeln, indem man den entsprechenden Lösungen durch pH-Wert-Steuerung frisches Ultrafiltrat sowie frische Base zudosiert und gleichzeitig entsäuertes Ultrafiltrat und teilneutralisierte Base abführt (Feed und Bleed). Die Lösungen können dabei im Parallel-, Kreuz- oder Gegenstrom durch die Elektrodialysekammern geleitet werden.

Weitere Elektrodialysezellen können in Form einer mehrstufigen Kaskade angeordnet sein, insbesondere beim kontinuierlichen Betrieb.

Als Ionenaustauschermembranen kommen an sich bekannte Membranen in Betracht, die z.B. eine Dicke von 0,1 bis 1 mm und einen Porendurchmesser von 1 bis 30 μm bzw. eine gelartige Struktur aufweisen.

Die Anionenaustauschermembranen sind nach allgemein bekanntem Prinzip aus einem Matrixpolymer aufgebaut, das chemisch gebundene kationische Gruppen enthält. Bei den Kationenaustauschermembranen enthält das Matrixpolymer anionische Gruppen.

Beispiele für Matrixpolymere sind Polystyrol, das mit z.B. Divinylbenzol oder Butadien vernetzt wurde, hoch- oder niedrigdichtes Polyethylen, Polysulfon, aromatische Polyethersulfone, aromatische Polyetherketone und fluorierte Polymere.

Die kationischen Gruppen werden durch Copolymerisation, Substitution, Pfropfung oder Kondensationsreaktion in die Matrixpolymere eingeführt. Beispiele für derartige Monomere sind Vinylbenzylammonium-, Vinylpyridinium- oder Vinylimidazolidinium-Salze. Über Amid- oder Sulfonamid-Kondensationsreaktionen werden Amine, die noch quaternäre Ammoniumgruppen aufweisen, in das Matrixpolymere eingeführt.

Die anionischen Gruppen, in der Regel Sulfonat-, Carboxylat- oder Phosphonatgruppen, werden durch Copolymerisation, Kondensation, Pfropfung oder Substitution, z.B. im Falle von Sulfonsäuregruppen durch Sulfonierung oder Chlorsulfonierung, eingeführt.

Membranen auf Polystyrolbasis sind z.B. unter den Bezeichnungen Selemion® (Fa. Asahi Glas), Neosepta® (Fa. Tokoyama Soda), Ionac® (Ionac Chemical Company) oder Aciplex® (Fa. Asahi Chem.) im Handel.

Membranen auf Basis mit quaterniertem Vinylbenzylamin gepfropftem Polyethylen sind unter der Bezeichnung Raipore® R-5035 (Fa. RAI Research Corp.), mit gepfropftem Polytetrafluorethylen unter der Bezeichnung Raipore R-1035, mit Styrolsulfonsäure gepfropftem Polyethylen unter der Bezeichnung R-5010 und mit Styrolsulfonsäure gepfropftem Polytetrafluorethylen unter der Bezeichnung R-1010, erhältlich.

In der EP-A-166015 sind Anionenaustauschermembranen auf Basis Polytetrafluorethylen mit einer über eine Sulfonamidgruppe gebundenen quaternären Ammoniumgruppe beschrieben. Kationenaustauschermembranen auf Basis von fluorierten Polymeren sind z.B. unter der Bezeichnung Nafion® (Fa. DuPont) erhältlich.

Die durch die Elektrodialysezellen geführten Lösungen haben eine Strömungsgeschwindigkeit von 0,001 m/s bis 2,0 m/s, vorzugsweise 0,01 bis 0,2 m/s.

Die Elektrodialyse wird bei Temperaturen von 0 bis 100°C, vorzugsweise 20 bis 50°C und bei Drücken von 1 bis 10 bar, vorzugsweise bei Atmosphärendruck durchgeführt. Der Druckabfall über die eingesetzten Membranen beträgt bis zu 5 bar, in der Regel bis zu 0,2 bar.

Mit dem Verfahren der kathodischen Elektrotauchlackierung werden elektrisch leitende Flächen beschichtet, z.B. Automobilkarosserien, Metallteile, Bleche aus Messing, Kupfer, Aluminium, metallisierten Kunststoffen oder mit leitendem Kohlenstoff überzogenen Materialien, sowie Eisen und Stahl, die gegebenenfalls chemisch vorbehandelt, z.B. phosphatiert, sind.

Das Verfahren der Entfernung von Säure aus dem Elektrotauchlackierbad mittels Elektrodialyse zeichnet sich durch hohe Kapazitäten aus, die über eine Variation der elektrischen Stromdichte den Erfordernissen angepaßt werden können. Neben der Säure werden nur unwesentliche Mengen der anderen organischen und anorganischen Bestandteile des Ultrafiltrates entfernt.

Versuchsanordnung und allgemeine Versuchsbeschreibung

Die Versuche erfolgten mit einer üblichen Plattenstapel-Elektrodialyse-Laborzelle (Membranabstand = 0,3 cm, freie Membranfläche 37,8 cm²). Die Zelle enthielt 3 Ultrafiltratkammern ($K_1$), 4 Basekammern ($K_2$) und 6 Membranen vom Typ Ionac® MA 3475. In den endständigen Basekammern war jeweils eine Elektrode zum Anlegen des elektrischen Feldes integriert, d.h. es wurde auf einen separaten Elektrodenspülkreis verzichtet. Als Elektrodenmaterial wurde Platin verwendet.

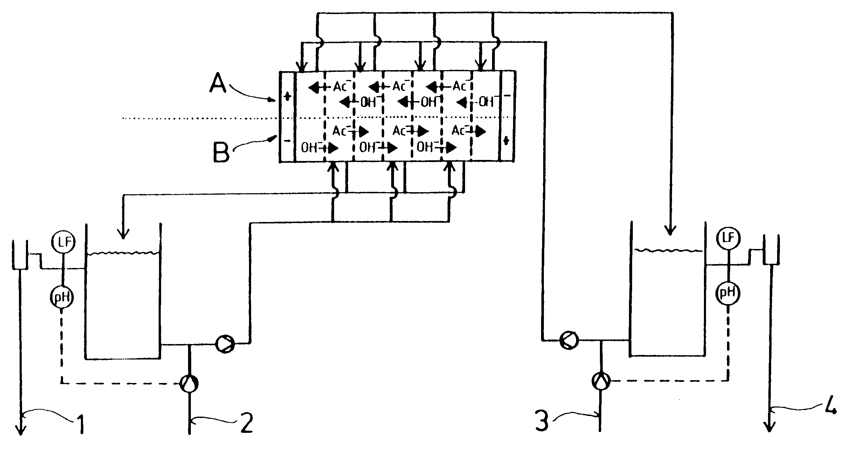

Die Fig. 1 zeigt die Versuchsanordnung. In schematischer Weise ist der Entsäuerungsprozeß in der Zelle für beide möglichen Polungszustände A oder B des elektrischen Feldes dargestellt. Die Ultrafiltrat- (2 : Einsatz saures Ultrafiltrat, 1 : Austrag entsäuertes Ultrafiltrat) und Basekammern (3 : Einsatz wäßrige Base, 4 : Austrag abgereicherte wäßrige Base + Salz) waren jeweils mit einem Kreislauf verbunden, der aus einem Vorratsbehälter, einer Pumpe und einem Wärmetauscher gebildet wurde. Während der Elektrodialyse wurden die Lösungen mit einer Geschwindigkeit von ca. 10 cm/s durch die Kammern gepumpt. Damit die Entsäuerung kontinuierlich geführt werden konnte, erfolgte die Prozeßführung in der Weise, daß im Ultrafiltratkreislauf durch Dosierung von "saurem" Ultrafiltrat (2) der gewünschte Restsäuregehalt und im Basekreislauf durch Dosierung einer Baselösung (3) der gewünschte Gehalt an Base aufrecht erhalten wurde. Die Ausschleusung des entsäuerten Ultrafiltrats (1) sowie der verbrauchten Baselösung (4) erfolgte mittels Überlauf in den entsprechenden Kreislaufbehältern (Feed & Bleed-Prozeß). Die Dosierung von saurem Ultrafiltrat bzw. von Baselösung erfolgte pH-Wert (pH) gesteuert. Die Meßpunkte (LF) waren in den Überläufen angeordnet.

Die Versuche erfolgten bei 25°C mit konstanten Stromdichten. Durch eine Schalteinheit ließ sich der Strom mit vorwählbaren Zeiten umpolen.

Eingesetzt wurden essigsäurehaltige Ultrafiltrate und zu Vergleichszwecken eine Modellösung, die Natriumacetat und Essigsäure enthielt.

Ultrafiltrat :

| Festkörper (%) : | 0,72 |
|---|---|
| Butylglykol (%) : | 0,67 |
| Phenoxipropanol (%) : | 0,22 |
| $Na^+$ (ppm) : | 16 |
| $Pb^{++}$ (ppm) : | 1225 |
| $Cl^-$ (ppm) : | 25 |
| pH-Wert : | 5,6 |

Modellösung

| NaAc (%) : | 0,14 |
|---|---|
| HAc (%) : | 0,023 |
| pH-Wert : | 5,4 |

Als Feed wurde im Basekreis eine NaOH mit 0,1 mol/kg verwendet. Der pH-Wert im Überlauf wurde auf 12,0 festgelegt.

Unter diesen Bedingungen wird die NaOH zu ca. 90% ausgenutzt (Konzentrationen im Bleed : NaOH ca. 0,01 mol/kg, NaAc ca. 0,09 mol/kg.

In den folgenden Beispielen wird anhand der spezifischen Kapazität, d.h. mol abgetrennte Essigsäure (HAc) pro Stunde und $m^2$ installierte Gesamtmembranfläche, gezeigt, daß

a) in "sauberen" Ultrafiltraten, die wenig oder keine Binderbruchstücke enthalten, die Kapazität oberhalb einer Umpolfrequenz von 0,05 $min^{-1}$ deutlich absinkt (Beispiel 1), und daß

b) in Ultrafiltraten, die Binderbruchstücke enthalten, die sich auf den Membranen ablagern können, eine optimale Umpolfrequenz gefunden werden kann, bei der eine deutlich höhere Kapazität erreicht wird als beim Entsäuern ohne Umpolung (Beispiel 2) und daß,

c) sich Ultrafiltrate, die Binderbruchstücke enthalten, die sich auf den Membranen ablagern können, unter geeigneten Bedingungen (optimale Umpolfrequenz) ohne Zwischenspülungen, mit Stillstandszeiten und Anpassung der Kapazität über die Variation der Stromdichte kontinuierlich entsäuern lassen (Beispiel 3).

```
Beispiel 1


Ultrafiltratkreis: Feed = Modellösung (pH = 5,4)
                   Austrags-pH-Wert = 6,5
Stromdichte        : j = 105,7 A/m²
Fahrweise          : Variation der Umpolfrequenz
```

| Umpolfrequenz [$min^{-1}$] | 30 | 3 | 1 | 0,5 | 0,25 | 0,1 | 0,05 | 0 |
|---|---|---|---|---|---|---|---|---|
| Kapazität [mol HAc/$m^2$ h] | 0,11 | 0,11 | 0,15 | 0,25 | 0,41 | 0,57 | 0,62 | 0,77 |

Beispiel 2

```
Ultrafiltratkreis:  Feed = Ultrafiltrat (pH = 5,6)
                    Austrags-pH-Wert = 6,4
Stromdichte         : j = 105,7 A/m²
Fahrweise           : Variation der Umpolfrequenz
```

Umpolfrequenz [min⁻¹]    1    0,5    0,25    0,1    0,05    0

---

Kapazität [mol HAc/m² h] 0,098 0,182 0,150 0,058 0,032 0,002

Beispiel 3

```
Ultrafiltratkreis:  Feed = Ultrafiltrat (pH = 5,6)
                    Austrags-pH-Wert = 6,3
Umpolfrequenz       : 0,25 min⁻¹
Fahrweise           : Variation der Stromdichte mit Stillstandszeiten
```

Während des Versuches wurde die Kapazität in halbstündigen Zeitintervallen ermittelt. Während der Stillstandszeiten waren die Kreislaufpumpen und der elektrische Strom abgeschaltet. Das Ultrafiltrat und die Baselösung verblieben in der Zelle, d.h. die Zelle wurde nicht entleert.

| Zeit [h] | Stromdichte [A/m²] | Kapazität [mol HAc/m²h] |
|---|---|---|
| 0 - 0,5 | 105,7 | 0,514 |
| 0,5 - 1,0 | 105,7 | 0,406 |
| 1,0 - 1,5 | 105,7 | 0,383 |
| 1,5 - 2,0 | 105,7 | 0,392 |
| 2,0 - 2,5 | 105,7 | 0,371 |
| 2,5 - 3,0 | 105,7 | 0,389 |
| 3,0 - 3,5 | 105,7 | 0,344 |
| 3,5 - 4,0 | 105,7 | 0,361 |
| 4,0 - 4,5 | 105,7 | 0,361 |
| 4,5 - 5,0 | 105,7 | 0,365 |
| 5,0 - 5,5 | 52,9 | 0,190 |
| 5,5 - 6,0 | 52,9 | 0,179 |
| 6,0 - 6,5 | 52,9 | 0,185 |
| 6,5 - 7,0 | 52,9 | 0,186 |
| 7,0 - 24,0 | Stillstand | |
| 24,0 - 24,5 | 52,9 | 0,195 |
| 24,5 - 25,0 | 52,9 | 0,191 |
| 25,0 - 25,5 | 0 | 0,041 |
| 25,5 - 26,0 | 0 | 0,019 |
| 26,0 - 26,5 | 0 | 0,021 |
| 26,5 - 27,0 | 0 | 0,016 |
| 27,0 - 27,5 | 0 | 0,016 |
| 27,5 - 28,0 | 0 | 0,014 |
| 28,0 - 28,5 | 0 | 0,012 |
| 28,5 - 29,0 | 0 | 0,012 |
| 29,0 - 29,5 | 52,9 | 0,188 |
| 29,5 - 30,0 | 52,9 | 0,192 |
| 30,0 - 30,5 | 52,9 | 0,171 |
| 30,5 - 31,0 | 52,9 | 0,182 |
| 31,0 - 49,5 | Stillstand | |
| 49,5 - 50,0 | 105,7 | 0,526 |
| 50,0 - 50,5 | 105,7 | 0,470 |
| 50,5 - 51,0 | 105,7 | 0,445 |
| 51,0 - 51,5 | 105,7 | 0,443 |
| 51,5 - 52,0 | 105,7 | 0,440 |

Die Analytik der Ein- und Austräge zeigte, daß aus dem Ultrafiltrat praktisch nur Essigsäure abgetrennt wurde.

| | pH | Na$^+$ (ppm) | Pb$^{++}$ (ppm) | Cl$^-$ (ppm) | Ac$^-$ (ppm) | OH$^-$ (ppm) | FK (%) | BG (%) | PP (%) |
|---|---|---|---|---|---|---|---|---|---|
| Ultrafiltrat | | | | | | | | | |
| Einsatz (Feed) | 5,6 | 16 | 1225 | 25 | | | 0,72 | 0,67 | 0,22 |
| Austrag (Bleed) | 6,2 | 18 | 1229 | 24 | | | 0,75 | 0,67 | 0,21 |
| Baselösung | | | | | | | | | |
| Einsatz (Feed) | 13 | 2299 | 0 | 0 | 0 | 1701 | 0 | 0 | 0 |
| Austrag (Bleed) | 12,3 | 2179 | <3 | 38 | 4355 | 321 | | n.n. | n.n. |

FK = Festkörpergehalt

BG = Butylglycol

PP = Phenoxipropanol

n.n. = unter identischen Bedingungen wie beim Ultrafiltrat nicht nachweisbar

Als Abfall fällt pro 100 kg entsäuertem Ultrafiltrat 2,3 kg einer Lösung an, die neben dem gebildeten Natriumacetat noch die restliche nicht umgesetzte NaOH enthält.

**Patentansprüche**

1. Verfahren zum Entfernen von Säure aus kathodischen Elektrotauchlackier-Bädern, in denen elektrisch leitende Substrate mit kationischen, in Form von wäßrigen Dispersionen vorliegenden Harzen beschichtet werden, durch Trennung der Dispersion mittels Ultrafiltration in die Harzdispersion und das Ultrafiltrat und Entsäuerung des Ultrafiltrates, indem man das Ultrafiltrat durch die Kammern $K_1$ einer mit Gleichstrom betriebenen Elektrodialysezelle mit der charakteristischen Sequenz

$$-(K_2\text{-}M_1\text{-}K_1\text{-}M_1)_n-,$$

in der $M_1$ die Anionenaustauschermembranen und n einen Wert von 1 bis etwa 500 bedeuten, leitet, und eine wäßrige Base durch die Kammern $K_2$ leitet, dadurch gekennzeichnet, daß man das elektrische Feld, das den Ionentransport durch die Membranen bewirkt, umpolt.

2. Verfahren nach Anspruch 1, dadurch gekennzeichnet, daß die Polarität der elektrischen Gleichspannung bzw. die Richtung des elektrischen Stromes mit einer Frequenz bis zu 30 min$^{-1}$ gewechselt wird.

3. Verfahren nach den Ansprüchen 1 oder 2, dadurch gekennzeichnet, daß die Elektrodialyse mit Stromdichten bis zu 100 mA/cm$^2$ vorgenommen wird.

4. Verfahren nach einem der Ansprüche 1 bis 3, dadurch gekennzeichnet, daß die Strömungsgeschwindigkeit der Flüssigkeiten in den Elektrodialysezellen 0,001 bis 2 m/s beträgt.

5. Verfahren nach einem der Ansprüche 1 bis 4, dadurch gekennzeichnet, daß man die Elektrodialyse bei 0 bis 100°C vornimmt.

6. Verfahren nach einem der Ansprüche 1 bis 5, dadurch gekennzeichnet, daß man eine wäßrige Base verwendet, die einen pH-Wert bis 14 hat.

7. Verfahren nach Anspruch 6, dadurch gekennzeichnet, daß man als Basen Natriumhydroxid, Kaliumhydroxid, Natriumcarbonat, Kaliumcarbonat, Calciumhydroxid, Bariumhydroxid, Ammoniak, Ammoniumcarbonat, Amine oder quaternäre Ammoniumhydroxide verwendet.

8. Verfahren nach einem der Ansprüche 1 bis 7, dadurch gekennzeichnet, daß die verwendeten wäßrigen Basen zusätzlich Salze enthalten.

9. Verfahren nach einem der Ansprüche 1 bis 8, dadurch gekennzeichnet, daß die Elektroden in den beiden endständigen Kammern $K_2$ der Elektrodialysezelle integriert sind.

10. Verfahren nach einem der Ansprüche 1 bis 8, dadurch gekennzeichnet, daß die Elektroden in zwei endständigen Elektrodenkammern angeordnet sind, die durch Kationenaustauschermembranen von benachbarten Kammern $K_1$ oder $K_2$ abgetrennt und in einem separaten Elektrodenspülkreis integriert sind, der einen Elektrolyten, bevorzugt Natriumsulfat, Natriumhydroxid, Natriumacetat, Essigsäure oder Schwefelsäure enthält.

## Claims

1. A process for removing acid from a cathodic electrocoating bath in which an electroconductive substrate is being coated with a cationic resin in the form of an aqueous dispersion by separation of the dispersion by ultrafiltration into a resin dispersion and an ultrafiltrate and deacidification of the ultrafiltrate by passing the ultrafiltrate through the chambers $K_1$ of a direct current operated electrodialysis cell comprising the characteristic sequence

$$—(K_2\text{-}M_1\text{-}K_1\text{-}M_1)_n—,$$

where $M_1$ is an anion exchange membrane and n is from 1 to about 500, and passing an aqueous base through the chambers $K_2$, which comprises reversing the polarity of the electric field responsible for ion transport through the membrane.

2. A process as claimed in claim 1, wherein the polarity of the direct voltage or the direction of the electric current is changed at a frequency of up to 30 $\text{min}^{-1}$.

3. A process as claimed in claim 1 or 2, wherein the electrodialysis is carried out at a current density of up to 100 $\text{mA/cm}^2$.

4. A process as claimed in any of claims 1 to 3, wherein the flow velocity of fluids in the electrodialysis cells is from 0.001 to 2 m/s.

5. A process as claimed in any of claims 1 to 4, wherein the electrodialysis is carried out at from 0 to 100°C.

6. A process as claimed in any of claims 1 to 5, wherein the aqueous base used has a pH of up to 14.

7. A process as claimed in claim 6, wherein the base used is sodium hydroxide, potassium hydroxide, sodium carbonate, potassium carbonate, calcium hydroxide, barium hydroxide, ammonia, ammonium carbonate, an amine or a quaternary ammonium hydroxide.

8. A process as claimed in any of claims 1 to 7, wherein the aqueous base used additionally contains a salt.

9. A process as claimed in any of claims 1 to 8, wherein the electrodes have been integrated in the two end chambers $K_2$ of the electrodialysis cell.

10. A process as claimed in any of claims 1 to 8, wherein the electrodes have been arranged in two end electrode chambers which have been separated by cation exchange membranes from adjacent chambers $K_1$ or $K_2$ and have been integrated in a separate electrode rinse cycle containing an electrolyte, preferably sodium sulfate, sodium hydroxide, sodium acetate, acetic acid or sulfuric acid.

## Revendications

1. Procédé pour éliminer les acides de bains de laquage par trempage électrophorétique cathodique, dans lesquels on revêt des subjectiles conducteurs de l'électricité avec des résines cationiques, qui se présentent sous la forme de dispersions aqueuses, par séparation de la dispersion à l'aide d'une ultrafiltration en la dispersion de résine et l'ultrafiltrat et la désacidification de l'ultrafiltrat, pour autant que l'on conduise l'ultrafiltrat à travers les chambres $K_1$ avec une cellule d'électrodialyse travaillant sous courant continu, avec la séquence caractéristique

$$— (K_2\text{-}M_1\text{-}K_1\text{-}M_1)_n —$$

dans laquelle $M_1$ désigne les membranes échangeuses d'anions et n possède une valeur qui varie de 1 à environ 500 et on conduit une base aqueuse à travers les chambres $K_2$, caractérisé en ce que l'on inverse les poles du champ électrique qui assure le transport des ions à travers les membranes.

2. Procédé suivant la revendication 1, caractérisé en ce que l'on modifie la polarité de la tension continue électrique, ou la direction du courant électrique avec une fréquence allant jusqu'à 30 $\text{min}^{-1}$.

3. Procédé suivant la revendication 1 ou 2, caractérisé en ce que l'on entreprend l'électrodialyse avec des densités de courant allant jusqu'à 100 $\text{mA/cm}^2$.

4. Procédé suivant l'une quelconque des revendications 1 à 3, caractérisé en ce que la vitesse d'écoulement des liquides dans les cellules d'électrodialyse varie de 0,001 à 2 m/s.

5. Procédé suivant l'une quelconque des revendications 1 a 4, caractérisé en ce que l'on entreprend l'électrodialyse à une température de 0 à 100°C.

6. Procédé suivant l'une quelconque des revendications 1 à 5, caractérisé en ce que l'on utilise une base aqueuse qui possède une valeur de pH allant jusqu'à 14.

7. Procédé suivant la revendication 6, caractérisé en ce qu'à titre de bases, on utilise l'hydroxyde de sodium, l'hydroxyde de potassium, le carbonate de sodium, le carbonate de potassium, l'hydroxyde de calcium, l'hydroxyde de baryum, l'ammoniac, le carbonate d'ammonium, des amines ou des hydroxydes d'ammonium quaternaire.

8. Procédé suivant l'une quelconque des revendications 1 à 7, caractérisé en ce que les bases aqueuses utilisées contiennent complémentairement des sels.

9. Procédé suivant l'une quelconque des revendications 1 à 8, caractérisé en ce que les électrodes sont intégrées dans les deux chambres $K_2$ terminales de la cellule d'électrodialyse.

10. Procédé suivant l'une quelconque des revendications 1 à 8, caractérisé en ce que les électrodes sont agencées dans deux chambres à électrodes terminales qui sont séparées des chambres voisines $K_1$ ou $K_2$ par des membranes échangeuses de cations et sont intégrées dans un circuit de rinçage d'électrodes séparé, qui contient un électrolyte, de préférence le sulfate de sodium, l'hydroxyde de dosium, l'acétate de sodium, l'acide acétique ou l'acide sulfurique.